# EUROPEAN PATENT SPECIFICATION

(11) **EP 2 555 362 B1**
(45) Date of publication and mention of the grant of the patent: **31.08.2016**
(21) Application number: 10849002.0
(22) Date of filing: 19.10.2010
(51) Int. Cl.: H02G 3/22, B60R 16/02, H01B 17/58, H01R 13/52, H02G 15/013

(54) **GROMMET AND WATERPROOF STRUCTURE FOR GROMMET**
TÜLLE UND WASSERFESTE STRUKTUR FÜR EINE TÜLLE
PASSE-FIL ET STRUCTURE ÉTANCHE À L'EAU POUR PASSE-FIL

(30) Priority: 30.03.2010 JP 2010077771
(43) Date of publication of application: 06.02.2013
(73) Proprietor: Sumitomo Wiring Systems, Ltd., Yokkaichi-shi, Mie 510-8503 (JP)
(72) Inventor: MATSUNAGA, Takehiro, Yokkaichi-shi Mie 510-8503 (JP)
(74) Representative: Uchida, Kenji
(86) International application number: PCT/JP2010/068364
(87) International publication number: WO 2011/121829

(56) References cited:
- EP-A1- 0 553 872
- EP-A2- 0 650 227
- DE-A1- 3 904 069
- JP-A- 8 274 479
- JP-A- 11 273 481
- JP-A- H04 315 780
- JP-A- H10 247 546
- JP-A- 2004 120 911
- JP-U- 62 119 147
- US-A- 5 720 487
- US-A- 5 811 728

## Description

### Technical Field

The present invention relates to a grommet and a waterproof structure of a grommet.

### Background Art

A conventional grommet is disclosed in Patent Document 1. The grommet includes a grommet body that is inserted in a mounting hole of a panel. An electric wire insertion hole into which an electric wire is inserted is formed so as to pass through the inside of the grommet body. Also, the grommet body is constituted by a small diameter tube section in which the inside diameter of the electric wire insertion hole is small, and a large diameter tube section in which the inside diameter of the electric wire insertion hole is large. An annular groove is formed circumferentially around the outer circumferential face of the large diameter tube section, and the grommet body is mounted to the panel by fitting an inner circumferential edge of the mounting hole of the panel into the annular groove. Further, a plurality of sealing projections are formed on the inner circumferential face of the electric wire insertion hole of the small diameter tube section. Simple waterproofing inside the grommet body can be achieved by the sealing projections coming into elastic contact with the outer circumferential face of the electric wire. On the other hand, the electric wire is movably inserted in the electric wire insertion hole of the large diameter tube section.

### Citation List

### Patent Document

Patent Document 1: JP H11-96840A

Further, EP 0 650 227 A2 discloses a rubber plug for a waterproof connector, in which he rubber plug and a wire are fitted in a cavity of the waterproof connector, and the rubber plug comprises a seal portion that contacts an inner surface of the cavity and the wire , an extension portion extending from the seal portion toward an open end of the cavity, and a gap formed between the extension portion and the inner surface of the cavity.

### Disclosure of Invention

### Problem to be Solved by the Invention

In the above-described case, the electric wire drawn out from the large diameter tube section may be swung in a direction intersecting with the direction in which it was drawn out, and the electric wire may thus be bent in the inside diameter tube section. Then, the swinging of the electric wire is directly transmitted to the inside diameter tube, and consequently, the diameter of the electric wire insertion hole is expanded in the bending direction of the electric wire, while, on the other hand, the sealing projections located on the opposite side from the bending direction may become separated from the outer circumferential face of the electric wire, which may in turn reduce the sealing characteristic.

The present invention has been completed in view of the above-described circumstances, and it is an object of the invention to prevent degradation of the sealing characteristic of a grommet.

### Means for Solving Problem

To the above end, there is provided a grommet comprising:
a grommet body having an electric wire insertion hole through which an electric wire is inserted in the axial direction, the electric wire being drawn out from both end faces in the axial direction, the grommet body being configured to be inserted in a mounting hole of a mounting body, the mounting hole comprising a stepped section in an axial middle portion thereof;
a sealing section disposed on one end of the electric wire insertion hole of the grommet body in the axial direction, and having an inner circumferential lip formed on an inner circumferential face of the electric wire insertion hole, the inner circumferential lip elastically adhering to the electric wire; and
a non-sealing section disposed on another end of the electric wire insertion hole of the grommet body in the axial direction and having no inner circumferential lip on the inner circumferential face of the electric wire insertion hole, the electric wire insertion hole in the non-sealing section having an inside diameter dimension larger than an inside diameter dimension of the inner circumferential lip in the sealing section, the electric wire being inserted in the electric wire insertion hole in a loosely fitted state, a formation range of the non-sealing section being defined such that the linearity of the electric wire in the sealing section is retained when the electric wire drawn out from the other end face of the grommet body is bent, characterized in that:
   said grommet body includes a sealing zone at one end thereof in the axial direction and a non-sealing zone at the other end thereof, each having an outer circumferential face,
wherein said grommet further comprises a radial step interposed between the outer circumferential face of the sealing zone and that of the non-sealing zone, the sealing zone being radially larger than the non-sealing zone;
wherein the radial step is abutted against the stepped section of the mounting hole and substantially the entire grommet body is accommodated therein in a positioned state.

Preferably, an outer circumferential lip that elastically adheres to the inner circumferential face of the mounting hole is formed on an outer circumferential face of the sealing section.

Preferably still, the electric wire insertion hole of the non-sealing section has an inside diameter dimension that is substantially the same as an inside diameter dimension of the electric wire insertion hole assuming that the sealing section does not include the inner circumferential lip.

Preferably yet, the non-sealing zone has an axial length greater than an axial length of the sealing zone.

Typically, a part of the sealing section is included in the non-sealing zone.

The invention also relates to a waterproof structure of a grommet, comprising the grommet, and a mounting body comprising a mounting hole through which the grommet body is inserted,
wherein a pair of flat notched faces are formed in opposed positions on the outer circumferential face of the non-sealing section, and a pair of receiving faces) for receiving the notched faces in a surface-to-surface contact state are formed in opposed positions on the inner circumferential face of the mounting hole.

Preferably, the entire grommet body is accommodated inside the mounting hole.

Preferably still, a stepped section is formed on the inner circumferential face of the mounting hole, the receiving faces are formed on the other end bounded by the stepped section, and the step is abutted against the stepped section when the grommet body is inserted properly into the mounting hole.

Preferably yet, after insertion of the grommet body into the mounting hole, a retainer plate is fixed via a bolt to the surface of the mounting body, and the retainer plate is in contact with a portion surrounding the one end face of the grommet body.

Suitably, the mounting body is a casing and the grommet body is inserted into the mounting hole such that the sealing section faces toward outside of the casing and that the non-sealing section faces toward inside of the casing.

By bending the electric wire drawn out from the other end face of the grommet body, the swinging of the grommet body is suppressed by the non-sealing section and the linearity of the electric wire in the sealing section is retained, and therefore, the sealing characteristic of the grommet body is maintained with the sealing section. Consequently, degradation of the sealing characteristic of the grommet is prevented.
(2) The electric wire insertion hole of the non-sealing section has an inside diameter dimension that is substantially the same as an inside diameter dimension of the electric wire insertion hole assuming that the sealing section does not include the inner circumferential lip. Doing so can prevent the non-sealing section from becoming significantly larger.
(5) Apart of the sealing section is included in the non-sealing zone. This further increases the sealing characteristic of the sealing section.

According to the present invention, there is also provided a waterproof structure of a grommet in which the grommet body is inserted in the mounting hole of the mounting body in the grommet having the above-described configuration, wherein a pair of flat notched faces are formed in opposed positions on the outer circumferential face of the non-sealing section, and a pair of receiving faces for receiving the notched faces in a surface-to-surface contact state are formed in opposed positions on the inner circumferential face of the mounting hole.

Since the notched faces of the non-sealing section are received by the receiving faces of the mounting hole in a surface-to-surface contact state, it is possible to avoid deformation of the non-sealing section in the bending direction of the electric wire when the electric wire drawn out from the other end face of the grommet body is bent. Accordingly, it is possible to reduce the influence of the swinging of the electric wire that is exerted on the sealing section in a more reliable manner.
(3) After insertion of the grommet body into the mounting hole, a retainer plate is fixed via a bolt to the surface of the mounting body, and the retainer plate is in contact with a portion surrounding the one end face of the grommet body. This can restrict withdrawal of the grommet body from the mounting hole.
(4) The mounting body is a casing and the grommet body is inserted into the mounting hole such that the sealing section faces toward outside of the casing and that the non-sealing section faces toward inside of the casing.

### Effects of the Invention

According to the present invention, it is possible to prevent degradation of the sealing characteristic of a grommet.

### Brief Description of Drawings

[FIG. 1] FIG. 1 is a diagram showing an overall configuration including a waterproof structure of a grommet according to Embodiment 1 of the present invention.
[FIG. 2] FIG. 2 is a cross-sectional view of the waterproof structure of a grommet.
[FIG. 3] FIG. 3 is a cross-sectional view of the grommet.
[FIG. 4] FIG. 4 is a rear view of the grommet.

### Description of the Invention

### Embodiment 1

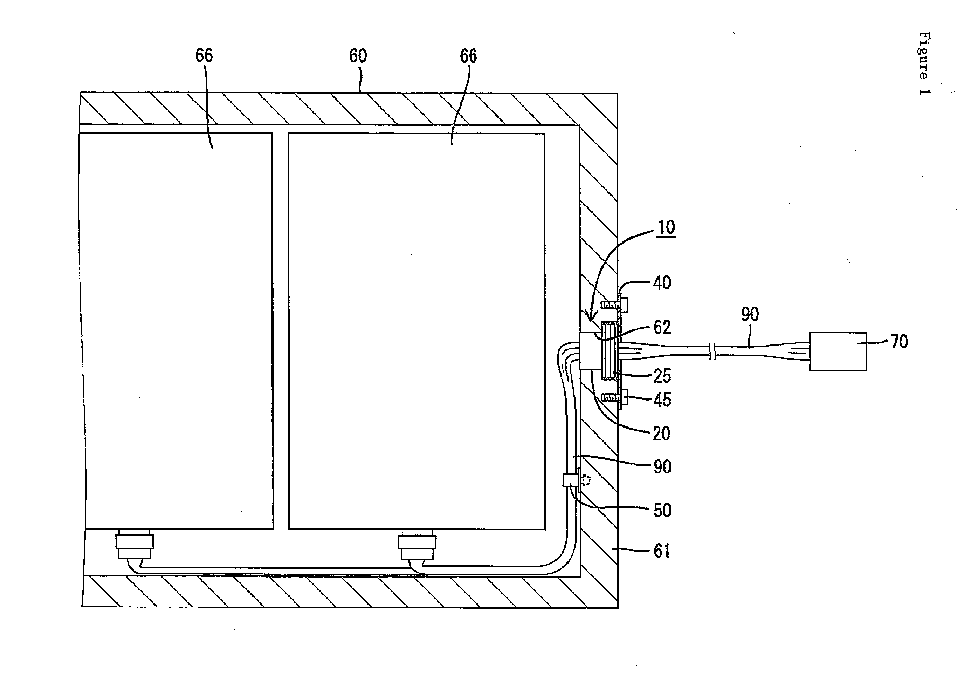

Embodiment 1 of the present invention will be described with reference to FIGS. 1 to 4.

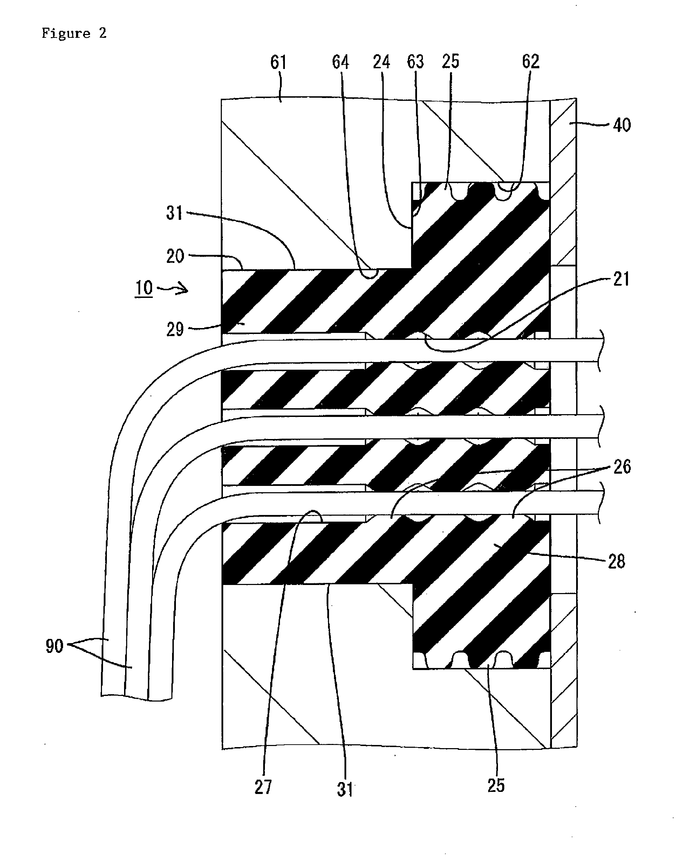

A grommet 10 is made of rubber and includes a grommet body 20 having the shape of a substantially cylindrical block. In the case of this embodiment, the grommet body 20 is configured to be mounted to a casing 60 serving as a mounting body. The casing 60 is made of aluminum or an aluminum alloy, and has a mounting hole 62 formed so as to pass through a side wall 61 thereof in the axial direction (the front-back direction), into which the entire grommet body 20 is inserted, as shown in FIG. 1. As shown in FIG. 2, a stepped section 63 is formed in an axially middle portion of the mounting hole 62, which defines the thickness range of the side wall 61, and receiving faces 64 are formed in a rear portion bounded by the stepped section 63. The receiving faces 64 have a flat shape, paired with each other in the height direction, and are arranged substantially parallel to each other. Further, components 66 such as various electronic components are accommodated inside the casing 60.

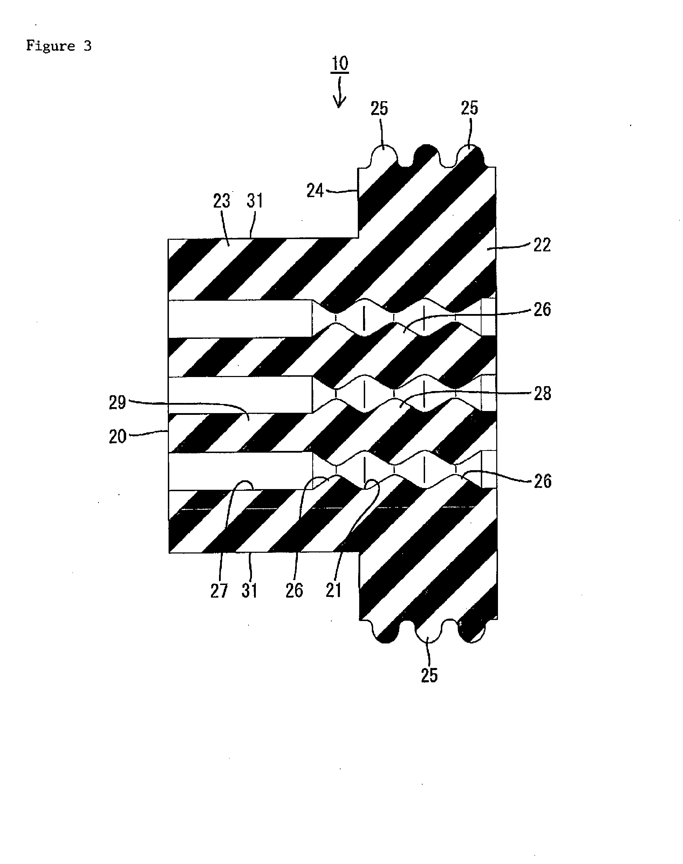

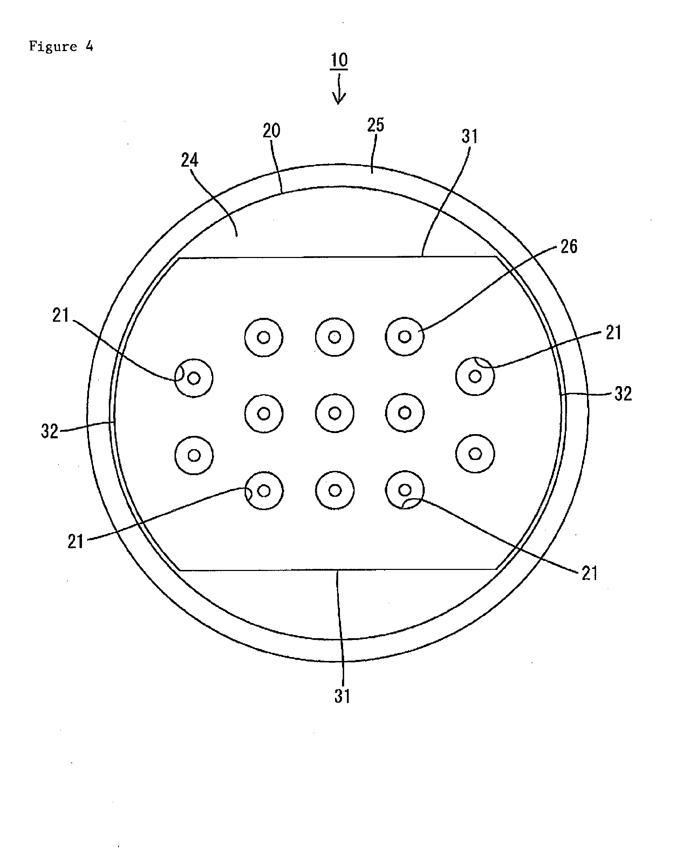

The grommet body 20 has a plurality of electric wire insertion holes 21 formed so as to pass therethrough in the axial direction. As shown in FIGS. 3 and 4, the electric wire insertion holes 21 are arranged in the central portion of the grommet body 20 so as to be grouped in a slightly horizontally elongated configuration. Also, each of the electric wire insertion holes 21 is configured such that an electric wire 90 is individually inserted therethrough in the axial direction.

Further, the front end of the grommet body 20 serves as a sealing zone 22, and a portion of the grommet body 20 that is located rearward of the sealing zone 22 serves as a non-sealing zone 23. The non-sealing zone 23 has an axial length longer than the axial length of the sealing zone 22. A radial step 24 is formed between the outer circumferential face of the sealing zone 22 and the outer circumferential face of the non-sealing zone 23, and the sealing zone 22 is radially larger than the non-sealing zone 23, with the step 24 interposed therebetween.

A plurality of outer circumferential lips 25 are formed circumferentially around the outer circumferential face of the sealing zone 22. The outer circumferential lips 25 are configured to elastically adhere to the inner circumferential face of the mounting hole 62 around the entire circumference upon mounting to the casing 60. Also, a plurality of inner circumferential lips 26 are formed circumferentially around the inner circumferential face of the electric wire insertion holes 21 in the sealing zone 22. The inner circumferential lips 26 are configured to elastically adhere to the outer circumferential face of the electric wires 90 around the entire circumference upon insertion of the electric wires 90 into the electric wire insertion holes 21.

Note that in a natural state the height dimension of the inner circumferential lips 26 is smaller than the height dimension of the outer circumferential lips 25, and the width dimension of the inner circumferential lips 26 is larger than the width dimension of the outer circumferential lips 25. Also, some of the inner circumferential lips 26 are disposed inside the electric wire insertion holes 21 in the non-sealing zone 23.

The inner circumferential face of the electric wire insertion holes 21 in the non-sealing zone 23 has no inner circumferential lips 26 formed thereon except for the front end thereof, and is formed as a flat circumferential face 27 without any irregularities. In the case of the present invention, the front end region, in which the inner circumferential lips 26 are formed, of the grommet body 20 serves as the sealing section 28, and the rear end region, in which a flat circumferential face 27 is formed without no inner circumferential lip 26 being formed, serves as a non-sealing section 29. Accordingly, a part of the sealing section 28 is included in the non-sealing zone 23.

The inside diameter dimension of the electric wire insertion holes 21 in the non-sealing section 29 is larger than the inside diameter dimension of the inner circumferential lips 26 of the sealing section 28. The electric wires 90 are inserted in the electric wire insertion holes 21 in the non-sealing section 29 in a loosely fitted state. Specifically, the inside diameter dimension of the electric wire insertion holes 21 in the non-sealing section 29 is substantially the same as the inside diameter dimension of the electric wire insertion holes 21 in the sealing section 28 assuming that the electric wire insertion holes 21 do not include the inner circumferential lips 26. In other words, each of the electric wire insertion holes 21 extends continually with substantially the same diameter throughout the entire length of the grommet body 20 assuming that the inner circumferential lip 26 is not included.

A pair of notched faces 31 are formed in opposed positions, in the height direction, on the outer circumferential face of the non-sealing zone 23. The two notched faces 31 are flat faces along the width direction, and are disposed substantially parallel to each other. Also, a pair of circular-arc faces 32 are formed in opposed positions, in the width direction, on the outer circumferential face of the non-sealing zone 23 between the two notched faces 31. The two circular-arc faces 32 are disposed concentrically with the outer circumferential lips 25.

Next, the waterproof structure of the grommet 10 will be described.

An electric wire 90 is inserted into each of the electric wire insertion holes 21 of the grommet body 20. The inner circumferential lips 26 of the sealing section 28 respectively adhere to the outer circumferential face of the electric wires 90 in an elastically contracted state, and thereby, the space between each of the electric wires 90 and the grommet body 20 is sealed in a liquid-tight manner. Each of the electric wires 90 is drawn out from both of the front and rear end faces of the grommet body 20, and both terminals of each of the dawn electric wires 90 are inserted and held in a connector 70 (see FIG. 1).

The grommet body 20 is inserted into the mounting hole 62 of the casing 60 from the front, which is the front face side. When the grommet body 20 is inserted properly, the step 24 of the grommet body 20 is abutted against the stepped section 63 of the mounting hole 62, and substantially the entire grommet body 20 is accommodated inside the mounting hole 62 in a positioned state (see FIG. 2). At this time, the outer circumferential lips 25 adhere to the inner circumferential face of the mounting hole 62 in an elastically contracted state, and thereby, the space between the grommet body 20 and the casing 60 is sealed in a liquid-tight manner. Moreover, the notched faces 31 of the non-sealing zone 23 of the grommet body 20 are disposed so as to be capable of coming into contact with the receiving faces 64 of the mounting hole 62 in a surface-to-surface contact state, thereby restricting the free movement of the grommet body 20 about the axis in the mounting hole 62. Note that the electric wires 90 drawn out from the rear end face of the grommet body 20 are bent in a direction substantially orthogonal to the axis in order to avoid interference with the components 66 inside the casing 60, and thereafter routed along the inner wall face of the casing 60. At this time, the electric wires 90 are fixed to the inner wall face of the casing 60 with a clip 50 provided on the inner wall face of the casing 60.

A retainer plate 40 is fixed via bolts 45 to the surface of the side wall 61 so as to surround the mounting hole 62. The retainer plate 40 is in contact with the portion surrounding the front end face of the grommet body 20, thereby restricting the withdrawal of the grommet body 20 toward the front.

As shown in FIG. 2, the electric wires 90 are bent in a direction intersecting with the axis, with the rear end opening edge of each electric wire insertion hole 21 of the grommet body 20 as a fulcrum. At this time, although the electric wires 90 are disposed at an angle inside the electric wire insertion holes 21 in the non-sealing section 29, the angle of inclination is suppressed to a minimum, and the linearity thereof is retained inside the electric wire insertion holes 21 in the sealing section 28. In other words, the formation range of the non-sealing section 29 is defined as a range in which the linearity of the electric wires 90 is retained in the sealing section 28. Accordingly, before and after the bending operation of the electric wires 90, the sealing margin between the electric wires 90 and the inner circumferential lips 26 will not significantly change, and a predetermined sealing characteristic can be maintained.

As has been described thus far, according to this embodiment, bending the electric wires 90 drawn out from the rear end face of the grommet body 20 makes it possible to suppress the swinging of the grommet body 20 with the non-sealing section 29 and retain the linearity of the electric wires 90 in the sealing section 28, and therefore, the sealing characteristic of the grommet body 20 can be maintained with the sealing section 28. Consequently, degradation of the sealing characteristic of the grommet 10 is prevented

Further, the inside diameter dimension of the electric wire insertion holes 21 in the non-sealing section 29 is substantially the same as the inside diameter dimension of the electric wire insertion holes 21 in the sealing section 28 assuming that the electric wire insertion holes 21 do not include the inner circumferential lips 26, and therefore, the non-sealing section 29 will not become significantly large.

Since the notched faces 31 of the non-sealing zone 23 are received by the receiving faces 64 of the mounting hole 62 of the casing 60 in a surface-to-surface contact state, it is possible to avoid deformation of the non-sealing zone 23 and hence deformation of the non-sealing section 29 in the bending direction of the electric wires 90 when the electric wires 90 drawn out from the rear end face of the grommet body 20 are bent. Accordingly, it is possible to reduce the influence of the swinging of the electric wires 90 that is exerted on the sealing section 28 in a more reliable manner.

Moreover, since the entire grommet body 20 is accommodated inside the mounting hole 62 of the casing 60, it is possible to prevent the withdrawal of the grommet body 20 from the inside of the mounting hole 62 in an effective manner, while securing a large sealing margin between the grommet body 20 and the mounting body 60.

### Other embodiments

The present invention is not limited to the embodiment described by the above statements and drawings, and, for example, the following embodiments also fall within the technical scope of the present invention.
(1) In Embodiment 1, the grommet is constituted by a grommet body. However, according to the present invention, the grommet may include a portion other than a grommet body.
(2) In Embodiment 1, the formation range of the non-sealing zone is larger than the formation range of the sealing zone. However, according to the present invention, the formation range of the sealing zone may be larger than the formation range of the non-sealing zone.
(3) In Embodiment 1, the sealing section is formed on the front end side of the grommet body, and the non-sealing section is formed on the rear end side of the grommet body. However, according to the present invention, the sealing section may be formed on the rear end side of the grommet body, and the non-sealing section may be formed on the front end side of the grommet body. In this case, the non-sealing section is disposed on the front face side of the casing.

### Description of Reference Numerals

- 10: Grommet
- 20: Grommet body
- 21: Electric wire insertion hole
- 25: Outer circumferential lip
- 26: Inner circumferential lip
- 28: Sealing section
- 29: Non-sealing section
- 31: Notched face
- 60: Casing (Mounting body)
- 62: Mounting hole
- 64: Receiving face
- 90: Electric wire

## Claims

1. A grommet (10) comprising:
a grommet body (20) having an electric wire insertion hole (21) through which an electric wire (90) is inserted in the axial direction, the electric wire being drawn out from both end faces in the axial direction, the grommet body being configured to be inserted in a mounting hole of a mounting body, the mounting hole comprising a stepped section in an axial middle portion thereof;
a sealing section (28) disposed on one end of the electric wire insertion hole of the grommet body in the axial direction, and having an inner circumferential lip (26) formed on an inner circumferential face of the electric wire insertion hole, the inner circumferential lip elastically adhering to the electric wire; and
a non-sealing section (29) disposed on another end of the electric wire insertion hole of the grommet body in the axial direction and having no inner circumferential lip on the inner circumferential face of the electric wire insertion hole, the electric wire insertion hole in the non-sealing section having an inside diameter dimension larger than an inside diameter dimension of the inner circumferential lip in the sealing section, the electric wire being inserted in the electric wire insertion hole in a loosely fitted state, a formation range of the non-sealing section being defined such that the linearity of the electric wire in the sealing section is retained when the electric wire drawn out from the other end face of the grommet body is bent, **characterized in that**:
said grommet body (20) includes a sealing zone (22) at one end thereof in the axial direction and a non-sealing zone (23) at the other end thereof, each having an outer circumferential face,
wherein said grommet further comprises a radial step (24) interposed between the outer circumferential face of the sealing zone (22) and that of the non-sealing zone (23), the sealing zone (22) being radially larger than the non-sealing zone (23);
wherein the radial step(24) is abutted against the stepped section (63) of the mounting hole (62) and substantially the entire grommet body (20) is accommodated therein in a positioned state.

2. The grommet according to claim 1, wherein an outer circumferential lip (25) that elastically adheres to the inner circumferential face of the mounting hole is formed on an outer circumferential face of the sealing section.

3. The grommet according to claim 1, wherein the electric wire insertion hole of the non-sealing section has an inside diameter dimension that is substantially the same as an inside diameter dimension of the electric wire insertion hole assuming that the sealing section does not include the inner circumferential lip.

4. The grommet according to claim 1, wherein the non-sealing zone has an axial length greater than an axial length of the sealing zone.

5. The grommet according to claim 1, wherein a part of the sealing section is included in the non-sealing zone.

6. A waterproof structure of a grommet, comprising the grommet (10) according to claim 1, and a mounting body (60) comprising a mounting hole (62) through which the grommet body (20) is inserted,
wherein a pair of flat notched faces (31) are formed in opposed positions on the outer circumferential face of the non-sealing section (29), and a pair of receiving faces (64) for receiving the notched faces in a surface-to-surface contact state are formed in opposed positions on the inner circumferential face of the mounting hole (62).

7. The waterproof structure of a grommet according to claim 6, wherein the entire grommet body is accommodated inside the mounting hole.

8. The waterproof structure of a grommet according to claim 6,
wherein a stepped section (63) is formed on the inner circumferential face of the mounting hole (62), the receiving faces (64) are formed on the other end bounded by the stepped section (63), and the step is abutted against the stepped section (63) when the grommet body (20) is inserted properly into the mounting hole (62).

9. The waterproof structure of a grommet according to claim 8,
wherein after insertion of the grommet body into the mounting hole, a retainer plate is fixed via a bolt to the surface of the mounting body, and the retainer plate is in contact with a portion surrounding the one end face of the grommet body.

10. The waterproof structure of a grommet according to claim 6, wherein the mounting body is a casing and the grommet body is inserted into the mounting hole such that the sealing section faces toward outside of the casing and that the non-sealing section faces toward inside of the casing.

## Patentansprüche

1. Tülle (10), umfassend:
einen Tüllenkörper (20) mit einer Elektrokabel-Einführöffnung (21), durch welche ein elektrisches Kabel (90) in axialer Richtung eingeführt ist, wobei das elektrische Kabel aus beiden Endseiten in axialer Richtung herausgezogen ist, wobei der Tüllenkörper zum Einführen in ein Befestigungsloch eines Befestigungskörpers konfiguriert ist, wobei das Befestigungsloch einen abgestuften Abschnitt in seinem Mittelteil in Achsrichtung umfasst;
einen dichtenden Abschnitt (28), welcher an einem Ende der Elektrokabel-Einführöffnung des Tüllenkörpers in axialer Richtung angeordnet ist und eine Innenumfangslippe (26) hat, welche an einer Innenumfangsfläche der Elektrokabel-Einführöffnung ausgebildet ist, wobei die Innenumfangslippe elastisch an dem elektrischen Kabel haftet; und
einen nicht-dichtenden Abschnitt (29), welcher an einem anderen Ende der Elektrokabel-Einführöffnung des Tüllenkörpers in axialer Richtung angeordnet ist und keine Innenumfangslippe an der Innenumfangsfläche der Elektrokabel-Einführöffnung hat, wobei die Elektrokabel-Einführöffnung in dem nicht-dichtenden Abschnitt eine Innendurchmesserabmessung hat, welche größer als eine Innendurchmesserabmessung der Innenumfangslippe in dem dichtenden Abschnitt ist, wobei das elektrische Kabel in einem locker eingepassten Zustand in die Elektrokabel-Einführöffnung eingeführt ist, wobei ein Ausbildungsbereich des nicht-dichtenden Abschnitts so festgelegt ist, dass die Linearität des elektrischen Kabels in dem dichtenden Abschnitt aufrecht erhalten wird, wenn das aus der anderen Endseite des Tüllenkörpers herausgezogene elektrische Kabel gebogen wird, **dadurch gekennzeichnet, dass**
der Tüllenkörper (20) einen dichtenden Bereich (22) an seinem einen Ende in axialer Richtung und einen nicht-dichtenden Bereich (23) an seinem anderen Ende enthält, welche jeweils eine Außenumfangsfläche haben,
wobei die Tülle ferner eine radiale Stufe (24) umfasst, die zwischen der Außenumfangsfläche des dichtenden Bereichs (22) und derjenigen des nicht-dichtenden Bereichs (23) angeordnet ist, wobei der dichtende Bereich (22) in radialer Richtung größer als der nicht-dichtende Bereich (23) ist;
wobei die radiale Stufe (24) gegen den abgestuften Abschnitt (63) des Befestigungslochs (62) stößt und im Wesentlichen der gesamte Tüllenköper (20) in einem platzierten Zustand darin angeordnet ist.

2. Tülle nach Anspruch 1, wobei eine Außenumfangslippe (25), welche an der Innenumfangsfläche des Befestigungslochs elastisch haftet, an einer Außenumfangsfläche des dichtenden Abschnitts ausgebildet ist.

3. Tülle nach Anspruch 1, wobei die Elektrokabel-Einführöffnung des nicht-dichtenden Abschnitts eine Innendurchmesserabmessung hat, welche im Wesentlichen die gleiche wie eine Innendurchmesserabmessung der Elektrokabel-Einführöffnung ist, unter der Annahme, dass der dichtende Abschnitt nicht die Innenumfangslippe enthält.

4. Tülle nach Anspruch 1, wobei der nicht-dichtende Abschnitt eine axiale Länge hat, welche größer als eine axiale Länge des dichtenden Abschnitts ist.

5. Tülle nach Anspruch 1, wobei ein Teil des dichtenden Abschnitts in dem nicht-dichtenden Abschnitt enthalten ist.

6. Wasserdichte Struktur einer Tülle, umfassend die Tülle (10) nach Anspruch 1 und einen Befestigungskörper (60), welcher ein Befestigungsloch (62) umfasst, durch welches der Tüllenkörper (20) eingeführt ist,
wobei zwei flache gekerbte Flächen (31) an einander abgewandten Positionen auf der Außenumfangsfläche des nicht-dichtenden Abschnitts (29) ausgebildet sind, und zwei aufnehmende Flächen (64) zum Aufnehmen der gekerbten Flächen in einem Fläche-zu-Fläche-Kontaktzustand an einander abgewandten Positionen auf der Innenumfangsfläche des Befestigungslochs (62) ausgebildet sind.

7. Wasserdichte Struktur einer Tülle nach Anspruch 6, wobei der gesamte Tüllenkörper in dem Befestigungsloch aufgenommen ist.

8. Wasserdichte Struktur einer Tülle nach Anspruch 6,
wobei ein abgestufter Abschnitt (63) an der Innenumfangsfläche des Befestigungslochs (62) ausgebildet ist, die aufnehmenden Flächen (64) an dem durch den abgestuften Abschnitt (63) begrenzten anderen Ende ausgebildet sind und die Stufe gegen den abgestuften Abschnitt (63) stößt, wenn der Tüllenkörper (20) richtig in das Befestigungsloch (62) eingeführt ist.

9. Wasserdichte Struktur einer Tülle nach Anspruch 8,
wobei nach Einführen des Tüllenkörpers in das Befestigungsloch eine Halteplatte über eine Schraube an der Oberfläche des Befestigungskörpers befestigt wird und die Halteplatte mit einem Abschnitt, welcher die eine Endseite des Tüllenkörpers umgibt, in Kontakt steht.

10. Wasserdichte Struktur einer Tülle nach Anspruch 6, wobei der Befestigungskörper ein Gehäuse ist und der Tüllenkörper so in das Befestigungsloch eingeführt ist, dass der dichtende Abschnitt in eine Richtung außerhalb des Gehäuses zeigt und der nicht-dichtende Abschnitt in eine Richtung innerhalb des Gehäuses zeigt.

## Revendications

1. Passe-fil (10) comprenant :
un corps de passe-fil (20) comportant un orifice d'insertion de fil électrique (21) à travers lequel un fil électrique (90) est inséré dans la direction axiale, le fil électrique étant tiré à partir des deux faces d'extrémité dans la direction axiale, le corps de passe-fil étant configuré de manière à être inséré dans un orifice de montage d'un corps de montage, l'orifice de montage comprenant une section étagée dans une partie centrale axiale de celui-ci ;
une section d'étanchéité (28) disposée sur une première extrémité de l'orifice d'insertion de fil électrique du corps de passe-fil dans la direction axiale, et présentant une lèvre circonférentielle interne (26) formée sur une face circonférentielle interne de l'orifice d'insertion de fil électrique, la lèvre circonférentielle interne adhérant de manière élastique au fil électrique ; et
une section non d'étanchéité (29) disposée sur une autre extrémité de l'orifice d'insertion de fil électrique du corps de passe-fil dans la direction axiale et ne comportant pas de lèvre circonférentielle interne sur la face circonférentielle interne de l'orifice d'insertion de fil électrique, l'orifice d'insertion de fil électrique dans la section non d'étanchéité présentant une dimension de diamètre interne supérieure à une dimension de diamètre interne de la lèvre circonférentielle interne dans la section d'étanchéité, le fil électrique étant inséré dans l'orifice d'insertion de fil électrique dans un état d'assemblage avec jeu, une plage de formation de la section non d'étanchéité étant définie de telle sorte que la linéarité du fil électrique dans la section d'étanchéité est conservée lorsque le fil électrique entraîné à partir de l'autre face d'extrémité du corps de passe-fil est courbé, **caractérisé en ce que** :
ledit corps de passe-fil (20) comporte une zone d'étanchéité (22) au niveau d'une première de ses extrémités dans la direction axiale et une zone non d'étanchéité (23) au niveau de l'autre de ses extrémités, chacune présentant une face circonférentielle externe,
dans lequel ledit passe-fil comprend, en outre, un palier radial (24) interposé entre la face circonférentielle externe de la zone d'étanchéité (22) et celle de la zone non d'étanchéité (23), la zone d'étanchéité (22) étant radialement supérieure à la zone non d'étanchéité (23) ;
dans lequel le palier radial (24) est en buté contre la section étagée (63) de l'orifice de montage (62) et sensiblement la totalité du corps de passe-fil (20) est reçue à l'intérieur dans un état positionné.

2. Passe-fil selon la revendication 1, dans lequel une lèvre circonférentielle externe (25) qui adhère de manière élastique à la face circonférentielle interne de l'orifice de montage est formée sur une face circonférentielle externe de la section d'étanchéité.

3. Passe-fil selon la revendication 1, dans lequel l'orifice d'insertion de fil électrique de la section non d'étanchéité présente une dimension de diamètre interne qui est sensiblement identique à une dimension de diamètre interne de l'orifice d'insertion de fil électrique en supposant que la section d'étanchéité ne comporte pas la lèvre circonférentielle interne.

4. Passe-fil selon la revendication 1, dans lequel la zone non d'étanchéité présente une longueur axiale supérieure à une longueur axiale de la zone d'étanchéité.

5. Passe-fil selon la revendication 1, dans lequel une partie de la section d'étanchéité est contenue dans la zone non d'étanchéité.

6. Structure étanche à l'eau d'un passe-fil, comprenant le passe-fil (10) selon la revendication 1, et un corps de montage (60) comprenant un orifice de montage (62) à travers lequel est inséré le corps de passe-fil (20),
dans laquelle une paire de faces plates découpées (31) est formée à des positions opposées sur la face circonférentielle externe de la section non d'étanchéité (29), et une paire de faces de réception (64) destinées à recevoir les faces découpées dans un état de contact de surface à surface sont formées à des positions opposées sur la face circonférentielle interne de l'orifice de montage(62).

7. Structure étanche à l'eau d'un passe-fil selon la revendication 6, dans laquelle le corps de passe-fil complet est reçu à l'intérieur de l'orifice de montage.

8. Structure étanche à l'eau d'un passe-fil selon la revendication 6,
dans laquelle une section étagée (63) est formée sur la face circonférentielle interne de l'orifice de montage (62), les faces de réception (64) sont formées sur l'autre extrémité bordée par la section étagée (63), et le palier est placé en butée contre la section étagée (63) lorsque le corps de passe-fil (20) est inséré correctement dans l'orifice de montage (62).

9. Structure étanche à l'eau d'un passe-fil selon la revendication 8,
dans laquelle, après insertion du corps de passe-fil dans l'orifice de montage, une plaque de retenue est fixée par l'intermédiaire d'une vis sur la surface du corps de montage, et la plaque de retenue est en contact avec une partie périphérique de la première face d'extrémité du corps de passe-fil.

10. Structure étanche d'un passe-fil selon la revendication 6, dans laquelle le corps de montage est un boîtier et le corps de passe-fil est inséré dans l'orifice de montage de telle sorte que la section d'étanchéité est orientée vers l'extérieur du boîtier et que la section non d'étanchéité est orientée vers l'intérieur du boîtier.
